# EUROPEAN PATENT SPECIFICATION

(11) **EP 4 263 145 B1**
(45) Date of publication and mention of the grant of the patent: **06.11.2024**
(21) Application number: 21839428.6
(22) Date of filing: 14.12.2021
(51) Int. Cl.: B25J 9/00, B66D 3/18, B25J 13/02, B25J 11/00

(54) **LOAD SUPPORTING DEVICE AND ITS USE**
LASTTRAGENDE VORRICHTUNG UND IHRE VERWENDUNG
DISPOSITIF DE SUPPORT DE CHARGE ET SON UTILISATION

(30) Priority: 15.12.2020 EP 20214246
(43) Date of publication of application: 25.10.2023
(73) Proprietor: Auxivo AG, 8603 Schwerzenbach (CH)
(72) Inventor: BARTENBACH, Volker, 8603 Schwerzenbach (CH); BEE, Dario, 8603 Schwerzenbach (CH); MUELLER, Flavio, 8603 Schwerzenbach (CH); REICHARD, Benno, 8603 Schwerzenbach (CH)
(74) Representative: P&TS SA (AG, Ltd.)
(86) International application number: PCT/EP2021/085693
(87) International publication number: WO 2022/129050

(56) References cited:
- EP-A1- 3 647 255
- WO-A1-2011/127471
- WO-A1-2019/184589
- KR-B1- 101 799 057
- US-A1- 2020 331 150

## Description

The invention relates to a load supporting device for attaching to the pelvis of a user. The invention can be used advantageously for lifting and/or particularly carrying a piece of luggage, a piece of furniture, construction material, construction components, a larger or heavier assembly, moving boxes, parcels, bags, and/or other heavy loads.

An average human can lift and carry only a limited load. The lifted load can impose mechanical stress on the muscles and tendons, the skeleton and its cartilages and joints. Repeated lifting of greater loads can cause fatigue and wear particularly of the joints. Further, the human needs to stabilize the lifted load need by his torso and spine. Particularly, the torso's muscles can get tired due to carrying heavier loads in which tired state the joints gets even more stressed.

The portable load lifting assist system of WO 2011/127471 A1 includes a movable support structure including an exoskeleton torso including an exoskeleton trunk that is configured to be coupled to a person's upper body, and a load lifting mechanism secured to the movable support structure including a winch having a motor driven reel mechanism for reeling first and second lifting straps or cables that are secured to first and second end effectors. First and second handles are attached to an outside surface of the first and second end effectors, wherein the lifting straps or cables when driven by the winch lift a load contacted by the first and second end effectors. A lower extremity exoskeleton is configured to be coupled to a person's lower limbs. The exoskeleton trunk couples to the person's upper body through an upper body interface device that is coupled to the lower extremity exoskeleton. EP 3647255A1 discloses another prior art load supporting device for attaching to the pelvis of a user comprising a support plate extending along a first axis, first and a second extension sections and an angled first lateral member, which can be positioned perpendicularly to the first axis and/or can be pivoted relative to the support plate.

The portable load lifting assist system is quite complex and bulky.

### Problem and solution

It is an object to provide an improved load supporting device.

This object is achieved by the load supporting device according to claim 1. Preferred embodiments form the subject matter of the dependent claims.

The load supporting device of claim 1 is suitable for attaching to the pelvis of a user. The supporting device comprises a base member having a first groove extending along a first axis A, a first extension section and a second extension section. The first groove is arranged between the first and second extension sections. Further, the device includes an angled first lateral member, an end of which is mechanically connected with the first extension section. The first lateral member can be positioned essentially perpendicularly to the first axis and/or can be pivoted relative to the base member, when the mechanical connection with the base member is released. The device also includes an angled second lateral member, an end of which is mechanically connected with the second extension section. The second lateral member can be positioned essentially perpendicularly to the first axis and/or can be pivoted relative to the base member, when the mechanical connection with the base member is released. The first and second lateral members are arranged to transfer the load supported by the load supporting device onto a user's hips, particularly to the user's iliac crests, when the load supporting device is used (state of use). The load supporting device comprises a dorsal member having a second groove which is mechanically connected with the first groove, wherein the second groove extends along the first axis, wherein the dorsal member is arranged to abut on the back of the user in the state of use. The first groove is arranged to slidingly guide the second groove along the first axis, when the mechanical connection between the first and second grooves is temporarily released.

The supported load can be transferred to the user's hips, particularly to the user's iliac crests, while using the load supporting device. As the relative positions of the base member and its lateral and dorsal members can be adjusted, the load supporting device can be better adapted to the anatomy of the user. When the dorsal member is positioned relative to the base member, that is the dorsal member is positioned closer of further away from the base member, the cooperating first and second grooves allow an improved guiding of the dorsal member. Further, the first and second grooves may help to improve the mechanical stability of the load supporting device during use. Thereby, the object is achieved. Further, the claimed load supporting device can be lighter or cheaper than the known portable load lifting assist system.

### Preferred embodiments

Preferred embodiments explained in the following can be combined with each other, advantageously, unless stated otherwise.

In an embodiment, a base of the first groove is arranged in a first plane and the extension sections are arranged in a spaced apart second plane. Side walls of the first groove can merge with curves into the base of the first groove and into the extension sections. This may help to improve the mechanical stability of the base member. A base of the second groove can be wider or narrower than the base of the first groove.

Another embodiment comprises a first and a second hip pad. The first hip pad is mechanically connected to the first lateral member and the second hip pad to the second lateral member. The hip pads are arranged between the respective lateral member and the respective user's hip in the state of use. The hip pads are arranged to transfer the load supported by the load supporting device onto the user's iliac crests. This may help to reduce the load imposed on the spine and the muscles of the torso.

Preferably, the mechanical connections of the first hip pad with the first lateral member and of the second hip pad with the second lateral member are arranged to permit relative rotational movement, preferably about an essentially horizontal axis in the state of use, preferably by up to +/- 90°, further preferred by up to +/- 15°, and/or relative translational movement. This may help to allow a more convenient use of the load supporting device.

Further preferably, the mechanical connections of the first hip pad with the first lateral member and of the second hip pad with the second lateral member are arranged to permit an angular movement such that the hip pad may tilt relative to the respective lateral member, preferably by up to +/- 10° relative to the first axis. The mechanical connections may be ball and socket joints. This may help to allow a more convenient use of the load supporting device.

Preferably, the mechanical connection between one or both of the lateral members and the base member is a hinge or a ball and socket joint.

A further embodiment comprises a releasable belt member which is arranged to surround the pelvis or hips of the user in the state of use and is mechanically connected to the first and second hip pad. The releasable belt member can include the first and second hip pad. This may help to better secure the load supporting device to the user's pelvis.

Preferably, the belt member may be mechanically connected with a frontal hip pad arranged to rest on the abdomen in the state of use. The frontal hip pad may have a loop or slit for accepting the belt member. The mechanical connection can have a ball and a cup for accepting the ball. This may help to reduce the pressure on the abdomen in the state of use.

In an embodiment, a first arm extends from the dorsal member and away from the base member, wherein a free end of the first arm is positioned higher than and in front of a shoulder of the user in the state of use. The first arm may extend generally upwardly from the dorsal member in the state of use. The first arm can be bolted, riveted, welded or glued to the dorsal member. The first arm may form an angle of less than 30° with the first axis. The first arm may provide a more convenient attachment point for the load to be supported. The first arm may allow the user to better control the supported load. The first arm may have an angled cross section. The cross section can have an H-shape, an L-shape, a T-shape, a U-shape or a V-shape. This may help to improve the first arm's resistance against bending by the supported load (bending stiffness).

Another embodiment comprises a load bearing member, such as a strap or rope, which extends from the free end of the first arm. A payload attachment member, preferably a hook, a shackle, a snap shackle, a soft shackle or carabiner or other lifting tackle, can be mechanically connected to a free end of the load bearing member. A length of the load bearing member between the arm's free end and the payload attachment member can be adjustable. This may help to tackle the load, to support the load and/or to handle it in the state of use.

Preferably, the first arm supports a spool, which can be spring loaded, which is arranged for winding up the load bearing member, wherein the load bearing member is mechanically connected with the spool. This may help to simplify adjusting the length of the load bearing member.

Preferably, the first arm or the spool comprise a releasable brake, preferably a cam cleat, suitable to prevent unintended unwinding of the load bearing member. Even in its locked state the brake may allow the spool to wind up the load bearing member. The releasable brake may comprise two rotational eccentric opposing cams urging towards each other. An alternative brake comprises a load bearing member support element and a single rotational eccentric cam biased towards the support element. This may help to simplify adjusting the length of the load bearing member.

An embodiment comprises a second arm similar to the first arm explained above, wherein a free end of the second arm and the first arm's free end leave a gap for the neck and/or head of the user in the state of use. This may help to better distribute the load on both hips of the user.

Another embodiment comprises a first shoulder strap arranged for transferring part of the load supported by the load supporting device onto a user's shoulder in its state of use, wherein the first shoulder strap is mechanically connected with one of the hip pads or with one of the lateral members. This may help reduce the load transferred onto the user's hips.

A further embodiment comprises a second shoulder strap similar to the first shoulder strap explained above. This may help reduce the load transferred onto the user's hips.

An embodiment comprises a chest strap for stabilizing the load supporting device in its state of use, preferably arranged for releasably connecting the first and second shoulder strap. This may help to secure the load supporting device to the user.

Another embodiment comprises a shoulder pad, which is arranged to abut on the user's shoulders in the state of use, wherein the first arm and/or the second arm are mechanically connected with the shoulder pad. This may help to stabilise the load supporting device relative to the user. Further, relative motion of the respective arm relative to the user may be reduced. The shoulder pad may be combined with the first and/or the second shoulder strap.

In an embodiment, the length of the load bearing member can be adjusted by a cable pull mechanism operable also while a load is supported to the load bearing member. The cable pull mechanism is arranged such that the length of the load bearing member can be extended or shortened after pulling the cable or while the cable is pulled.

The base member and/or the dorsal member can be made with aluminium, steel, magnesium, a polymer, PP, PE, ABS and/or a fibre reinforced polymer.

The mechanical connection of the base member with the dorsal member can be established by two or more bolts and nuts, a clamping mechanism, a locking mechanism or a quick release mechanism to allow for easy and fast height adjustment to ensure optimal fit of the device to the user.

One of the above embodiments can be used for lifting and/or carrying a piece of luggage, a piece of furniture, construction material, construction components, a larger or heavier assembly, moving boxes, parcels, bags, and/or other heavy loads.

Another embodiment comprises a handle which is arranged to be operated to release the load bearing member and/or the brake. The handle can be supported by the first or second arm of the load supporting device. The handle can be transferred reversibly from a first state in which the load bearing member is secured or prevented from unwinding to a second state in which the brake is released. The handle can be arranged not to prevent the spool from winding up the load bearing member. The handle can have a through hole for accepting the load bearing member. The handle can be arranged to release the brake directly or through a Bowden cable. The handle can be arranged to cause the brake to impose a frictional force on the spool while the load bearing member is unwound. The handle can be a lever which is rotatably supported by the first or second arm. This may help the user to adjust the height of the payload or the length of the load bearing member while the payload is attached.

Particularly if the brake is designed as a cam cleat with two rotational eccentric opposing cams biased towards each other for engaging the load bearing member, the handle can be designed and positioned such that it can extract the load bearing member from between the cams when the handle is transferred towards its second state. The handle can be arranged to urge or rotate at least one of these eccentric cams away from the load bearing member. The handle can be a spring loaded push button switch having the through hole for the load bearing member. In the first state of the switch the brake's cams can engage with the load bearing member and the spool can wind up the load bearing member, particularly if the force imposed on the spool by its spring is greater than the gravitational force by the payload. In the switch's second state the load bearing member can be extracted from the brake's cams. If the force imposed on the spool by its spring in the second state is less than the gravitational force by the payload, the spool can unwind the load bearing member. The spring loaded push button switch can be arranged to adopt its first state, if the payload's gravitational force or weight suffices to overcome a force by a spring of the push button switch which urges the switch towards its second state.

In a further embodiment, the load supporting device comprises a rotational damper which is arranged to apply a torque on the spool against unwinding the load bearing member or to decelerate the unwinding. This torque can be applied on the spool through friction or through hydraulic resistance. The rotational damper can comprise a gear that engages with a gear on the spool. The handle and the gear of the rotational damper can be connected by a Bowden cable or pull rod such that the handle can operate the gear. This may help to reduce or limit the velocity at which the payload is lowered. This embodiment may also help the user to adjust the height of the payload or the length of the load bearing member while the payload is attached.

An embodiment comprises a freewheel which is arranged to allow the spool to wind up the load bearing member while the brake is not released. The freewheel can couple a brake disk of the brake with the spool. A caliper of the brake can engage with the brake disk and the handle can be arranged to modify the force imposed by the caliper on the brake disk. This may help to reduce or limit the velocity at which the payload is lowered. This may help the user to adjust the height of the payload or the length of the load bearing member while the payload is attached.

A further embodiment comprises a ratchet and pawl mechanism. The ratchet is rotationally coupled with the spool, preferably such that the ratchet and the spool cannot rotate independently. The pawl is arranged to prevent an unwinding of the load bearing member when engaged with the ratchet (engaged state). The pawl can be rotatably supported by the first or second arm. The pawl can be spring loaded which spring urges the pawl towards the ratchet. The pawl can be actuated by the handle to release the ratchet or moved away from the ratchet. The handle and the pawl can be connected by a Bowden cable or pull rod such that the handle can disengage the pawl from the ratchet. This may help the user to adjust the height of the payload or the length of the load bearing member while the payload is attached.

According to an embodiment the brake is arranged to release the load bearing member if the load exceeds an upper limit value, particularly 50 kg. This may help to reduce the mechanical stress imposed by the load on the load supporting device or on the user.

### Exemplary embodiments

Further advantages become apparent to the skilled person from the following exemplary embodiments.

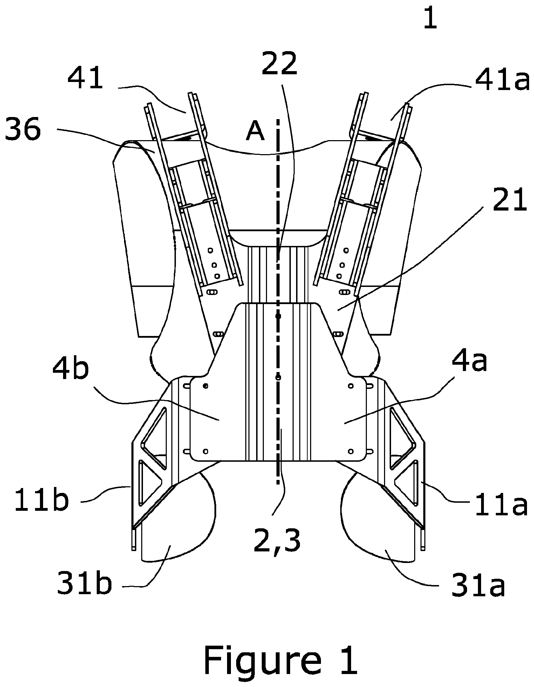

Figure 1 schematically shows a first exemplary load supporting device 1 for attaching to the pelvis of a user. The load supporting device comprises a base member 2 having a first groove 3 extending along a first axis A (dashed line), a first extension section 4a and a second extension section 4b. The first groove is arranged between the first and second extension sections. The device includes an angled first lateral member 11a, an end of which is mechanically connected with the first extension section. The device further includes an angled second lateral member 11b, an end of which is mechanically connected with the second extension section. Each of the first and second lateral members can be positioned essentially perpendicularly to the first axis when the mechanical connection with the base member is released. The first and second lateral members are arranged to transfer the load supported by the load supporting device onto a user's hips in its state of use. The device also comprises a dorsal member 21 having a second groove 22 which is mechanically connected with the first groove. The second groove extends along the first axis, wherein the dorsal member is arranged to abut on the back of the user in the state of use, wherein the first groove is arranged to guide the second groove slidingly along the first axis, when the mechanical connection between the first and second grooves is temporarily released.

Alternatively or additionally, each of the first and second lateral members can be pivoted relative to the base member when the mechanical connection with the base member is released, also for better adapting the load supporting device to the user's anatomy.

The load supporting device has a shoulder pad 36 which is arranged to abut on the user's shoulders in the state of use. The base member, the lateral members and/or the dorsal members are made with aluminium. The lateral members have triangular recesses for saving material and reducing the respective weight. The first groove 3 accepts a section of the second groove 22. The second groove extends further upwardly than the first groove in the state of use.

A first 41 and a second arm 41a extend essentially upwardly from the dorsal member. The arms have U-shaped cross sections. The arms can be bolted, riveted, welded or glued to the dorsal member. The free ends 43 of the first and second arm are spaced apart, such that there is a gap for the neck and head of a user. Load bearing members, such as a strap or rope, and payload attachment members are not shown. The free ends of the first and second arm are connected with the shoulder pad for stabilising the exemplary load supporting device relative to the user's torso.

The load supporting device can have a cable pull mechanism for adjusting the length of the load bearing member. The cable pull mechanism can be operable also while a load is supported to the load bearing member, wherein the cable pull mechanism is arranged such that the length of the load bearing member can be extended or shortened after pulling the cable or while the cable is pulled.

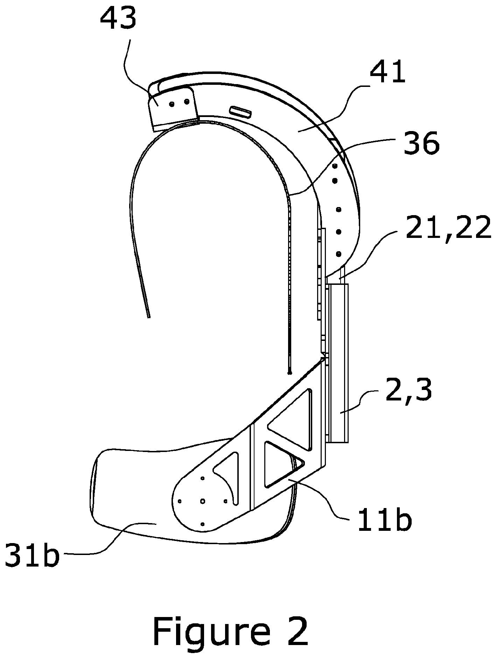

Figure 2 shows a side view on the first exemplary load supporting device and the above explanations apply.

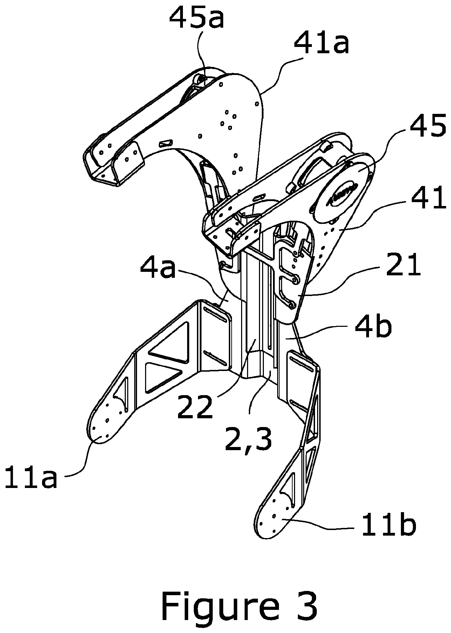

The second exemplary embodiment shown schematically in figure 3 differs from the first exemplary embodiment in that the first and second arm each support a spring loaded spool 45, 45a. Each of the free ends of the first 41 and second arm 41a can have a releasable brake, preferably a cam cleat, suitable to prevent unintended unwinding of the respective load bearing member.

Alternatively, or additionally, each of the first and second lateral members can be pivoted relative to the base member when the mechanical connection with the base member is released, also for better adapting the load supporting device to the user's anatomy.

The load supporting device can have a cable pull mechanism for adjusting the length of the load bearing member. The cable pull mechanism can be operable also while a load is supported to the load bearing member, wherein the cable pull mechanism is arranged such that the length of the load bearing member can be extended or shortened after pulling the cable or while the cable is pulled.

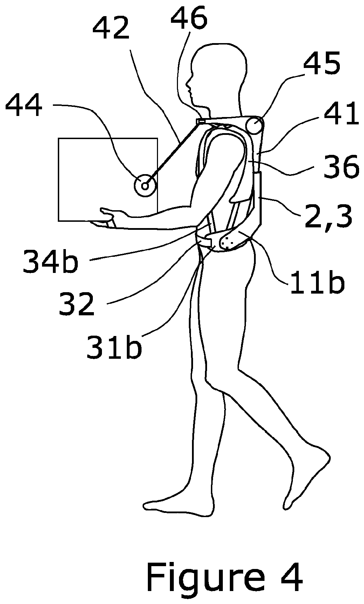

Figure 4 schematically shows a user wearing the second exemplary embodiment and the respective explanations apply. Further, a belt member 32 connected to the hip pads 31b helps to secure the load supporting device on the user's pelvis. The shoulder straps 34b (one is shown) are connected to the hip pads and help to transfer some of the load onto the user's shoulders and/or to safely secure the device to the user's torso. A load is secured by a payload attachment member 44. The load bearing member 42 extends from the spool 45, through the brake 46, passes the free end of the first arm and is connected to the payload attachment member.

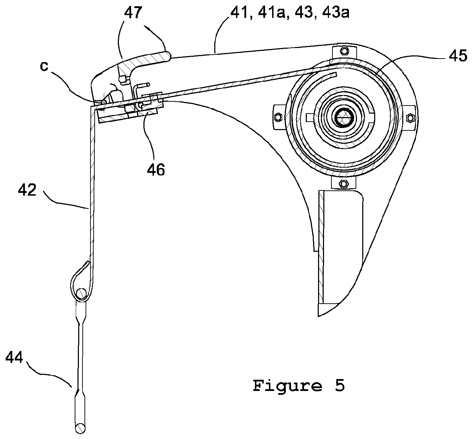

Figure 5 shows a first arm 41 of an exemplary embodiment which comprises and supports a handle 47 rotatably about axis C. The handle is arranged to be operated to release the load bearing member 42 and/or the brake 46. The handle can be transferred reversibly from a first state (shown in figure 5) in which the load bearing member is secured or prevented from unwinding to a second state (not shown) in which the brake 46 is released. The handle can be arranged not to prevent the spool from winding up the load bearing member. The handle 47 has a through hole for accepting the load bearing member 42. Here, the brake 46 is designed as a cam cleat. The handle 47 is designed and positioned such that it can extract the load bearing member from between the cams when the handle is operated to adopt its second state. The handle is rotated about axis C to adopt its second state. The spool can unwind the load bearing member if the handle is in its second state and the gravitational force by the load exceeds the force imposed on the spring loaded spool by its spring.

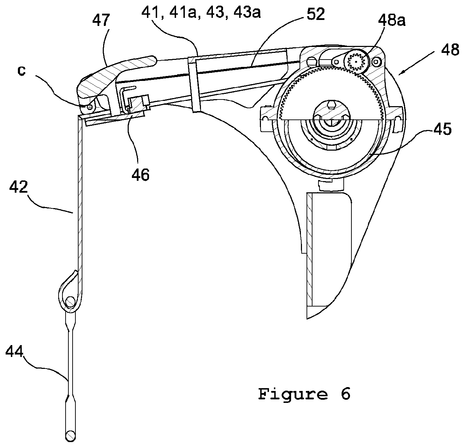

The first arm 41 of the load supporting device shown in figure 6 comprises a rotational damper 48 which is arranged to apply a torque on the spool 45 against unwinding the load bearing member or to decelerate the unwinding. The rotational damper is supported by the first or second arm 41, 41a about axis C and comprises a gear 48a that engages with a gear connected with the spool 45. A frictional or hydraulic resistance can be applied on the gear 48a for decelerating. This may help to reduce or limit the velocity at which the payload supported by carabiner 44 is lowered. Here, the handle 47 is arranged to extract the load bearing member 42 from the brake 46 and is coupled to the gear 48a, particularly by a Bowden cable 52 or a pull rod.

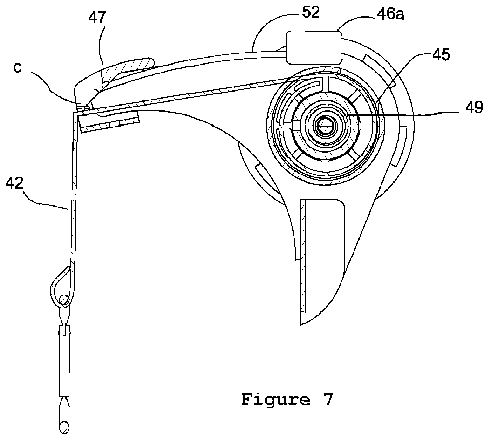

The exemplary embodiment shown by figure 7 comprises a freewheel 49 which is arranged to allow the spool 45 to wind up the load bearing member 42 while the brake 46 is not released. The freewheel can couple the spool 45 with a brake disk of the brake 46. A caliper 46a of the brake engages with the brake disk and the handle is connected with the caliper by a Bowden cable 52 or a pull rod. The handle is rotatably can be arranged to modify the force imposed by the caliper on the brake disk. The load bearing member can unwind if the gravitational force by the load exceeds the force imposed by the spring of the spring loaded spool augmented by the brake force. This may help to reduce or limit the velocity at which the payload is lowered.

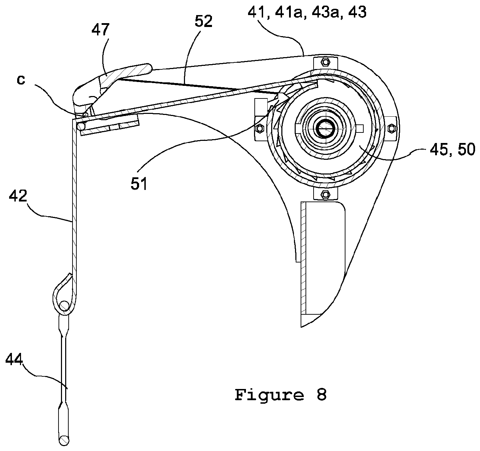

The exemplary embodiment shown in figure 8 comprises a ratchet and pawl mechanism. The ratchet 50 is rotationally coupled with the spool 45 such that the ratchet and spool cannot rotate independently. The pawl 51 is arranged prevent an unwinding of the load bearing member 42 when engaged with the ratchet (engaged state). The pawl can be rotatably supported about axis C by the first 41 or second arm 41a and can be spring loaded such that the spring urges the pawl towards the ratchet. The pawl can be actuated by the handle 47 to release the ratchet. The handle can be connected with the pawl by a Bowden cable 52 or a pull rod such that the handle can disengage the pawl from the ratchet.

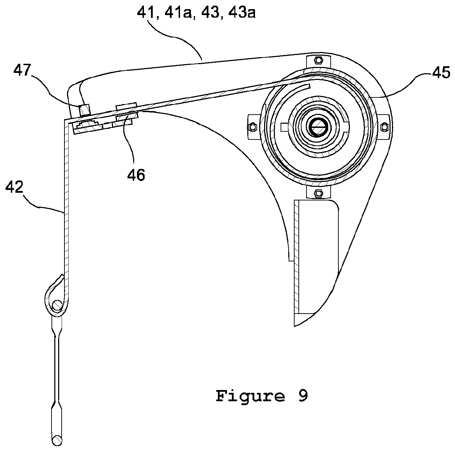

In the embodiment shown in figure 9 the handle 47 is a spring loaded push button switch having a through hole for the load bearing member. The load bearing member 42 is fed through the through hole. In the first state of the switch the cams of the brake 46 can engage with the load bearing member and the spool 45 can wind up the load bearing member, particularly if the force imposed on the spool by its spring is greater than the gravitational force by the payload. In the switch's second state the load bearing member can be extracted from the brake's cams. If the force imposed on the spool by its spring in the second state is less than the gravitational force by the payload, the spool can unwind the load bearing member. The spring loaded push button switch can be arranged to adopt its first state, if the payload's gravitational force or weight suffices to overcome a force by a spring of the push button switch which urges the switch towards its second state.

### Reference signs

- 1: load supporting device
- 2: base member
- 3: first groove
- 4: extension section
- 11: angled lateral member
- 21: dorsal member
- 22: second groove
- 31: hip pad
- 32: belt member
- 34: shoulder strap
- 35: chest strap
- 36: shoulder pad
- 41: first arm
- 42: load bearing member
- 43: free end of first arm
- 44: payload attachment member
- 45: spool
- 46: brake
- 47: handle for releasing the brake
- 48: rotational damper
- 49: freewheel
- 50: ratchet
- 51: pawl
- 52: bowden cable or pull rod

- A: first axis, essentially vertical in a state of use
- C: rotational axis of the handle

## Claims

1. Load supporting device (1) for attaching to the pelvis of a user, the supporting device comprising
a base member (2) having a first groove (3) extending along a first axis A, a first (4a) and a second extension section (4b), wherein the first groove is arranged between the first and second extension sections,
an angled first lateral member (11a), an end of which is mechanically connected with the first extension section, wherein the first lateral member can be positioned essentially perpendicularly to the first axis and/or can be pivoted relative to the base member, when the mechanical connection with the base member is released, and
an angled second lateral member (11b), an end of which is mechanically connected with the second extension section, wherein the second lateral member can be positioned essentially perpendicularly to the first axis and/or can be pivoted relative to the base member, when the mechanical connection with the base member is released,
wherein the first and second lateral members are arranged to transfer the load supported by the load supporting device onto a user's hips in its state of use,
a dorsal member (21) having a second groove (22) which is mechanically connected with the first groove, wherein the second groove extends along the first axis, wherein the dorsal member is arranged to abut on the back of the user in the state of use,
wherein the first groove is arranged to guide the second groove slidingly along the first axis, when the mechanical connection between the first and second grooves is temporarily released.

2. Load supporting device according to claim 1, wherein a first hip pad (31a) is mechanically connected to the first lateral member, and a second hip pad (31b) is mechanically connected to the second lateral member, wherein the hip pads are arranged between the respective lateral member and the respective user's hip in the state of use;
and, wherein preferably, a releasable belt member (32) arranged to surround the pelvis or hips of the user in the state of use is mechanically connected to the first and second hip pad (31a, 31b), preferably includes the first and second hip pad.

3. Load supporting device according to claim 2, wherein the mechanical connections of the first hip pad with the first lateral member and of the second hip pad with the second lateral member are arranged to permit relative rotational movement or relative translational movement.

4. Load supporting device according to one of the preceding claims, wherein a first arm (41) extends from the dorsal member (21) and away from the base member (2), wherein a free end (43) of the first arm is positioned higher than and in front of a shoulder of the user in the state of use, preferably wherein the first arm has an angled cross section.

5. Load supporting device according to claim 4, wherein a load bearing member (42), such as a strap or rope, extends from the free end (43) of the first arm, wherein a payload attachment member (44), such as a hook or carabiner or other lifting tackle, is mechanically connected to a free end of the load bearing member, wherein a length of the load bearing member between the arm's free end (43) and the payload attachment member is adjustable.

6. Load supporting device according to claim 5, wherein the first arm supports a preferably spring loaded spool (45) which is arranged for winding up the load bearing member, wherein the load bearing member is mechanically connected with the spool, preferably wherein the first arm or the spool comprise a releasable brake (46), preferably a cam cleat, suitable to prevent unintended unwinding of the load bearing member, preferably wherein the brake (46) is arranged to release the load bearing member (42) if the load exceeds an upper limit value..

7. Load supporting device according to claim 5 or 6, wherein the length of the load bearing member can be adjusted by a cable pull mechanism operable also while a load is supported to the load bearing member, wherein the cable pull mechanism is arranged such that the length of the load bearing member can be extended or shortened after pulling the cable or while the cable is pulled.

8. Load supporting device comprising a second arm (41a) similar to the first arm according to one of claims 4 to 7, wherein a free end (43a) of the second arm and the first arm's free end (43) leave a gap for the neck and/or head of the user in the state of use.

9. Load supporting device according to one of the preceding claims, further comprising a first shoulder strap (34) for transferring part of the load supported by the load supporting device onto a user's shoulder in its state of use, wherein the first shoulder strap is mechanically connected with one of the hip pads (31) or with one of the lateral members (11), preferably comprising a second shoulder strap (34a) similar to the first shoulder strap;
and, wherein the device preferably further comprises a shoulder pad (36) arranged to abut on the user's shoulders in the state of use, wherein the first arm and/or the second arm are mechanically connected with the shoulder pad.

10. Load supporting device according to one of the preceding claims, further comprising a chest strap (35) for stabilizing the load supporting device in its state of use, preferably arranged for releasably connecting the first and second shoulder strap.

11. Load supporting device according to one of claims 6 to 10, further comprising a handle (47) which is arranged to be operated to release the load bearing member (42) and/or the brake (46), preferably wherein the handle (47) can be transferred reversibly from a first state in which the load bearing member (42) is secured to a second state in which the brake (46) is released, wherein the handle can be a rotational lever or a push button switch.

12. Load supporting device according to one of claims 6 to 11, further comprising a rotational damper (48) which is arranged to apply a torque on the spool (45) against unwinding the load bearing member (42) or to decelerate the unwinding.

13. Load supporting device according to one of claims 6 to 12, further comprising a freewheel (49) which is arranged to allow the spool (45) to wind up the load bearing member (42) while the brake (46) is not released.

14. Load supporting device according to one of claims 6 to 13, further comprising a ratchet and pawl mechanism, wherein the ratchet (50) is rotationally coupled with the spool (45), wherein the pawl (51) is arranged to prevent an unwinding of the load bearing member (42) when engaged with the ratchet, wherein the pawl can be actuated by the handle (47) to release the ratchet (50).

15. Use of a load supporting device according to one of the preceding claims for lifting and/or carrying a piece of luggage, a piece of furniture, construction material, construction components, a larger or heavier assembly, moving boxes, parcels, bags, and/or other heavy loads.

## Patentansprüche

1. Lasttragvorrichtung (1) zur Befestigung am Becken eines Benutzers, wobei die Tragvorrichtung umfasst:
ein Basiselement (2) mit einer ersten Nut (3), die sich entlang einer ersten Achse A erstreckt, einem ersten (4a) und einem zweiten (4b) Verlängerungsabschnitt, worin die erste Nut zwischen dem ersten und dem zweiten Verlängerungsabschnitt angeordnet ist,
ein abgewinkeltes erstes Seitenelement (11a), dessen ein Ende mechanisch mit dem ersten Verlängerungsabschnitt verbunden ist, worin das erste Seitenelement im Wesentlichen senkrecht zur ersten Achse positioniert werden kann und/oder in Bezug auf das Basiselement geschwenkt werden kann, wenn die mechanische Verbindung mit dem Basiselement gelöst ist, und
ein abgewinkeltes zweites Seitenelement (11b), dessen ein Ende mechanisch mit dem zweiten Verlängerungsabschnitt verbunden ist, worin das zweite Seitenelement im Wesentlichen senkrecht zur ersten Achse positioniert werden kann und/oder in Bezug auf das Basiselement geschwenkt werden kann, wenn die mechanische Verbindung mit dem Basiselement gelöst ist,
worin das erste und das zweite Seitenelement derart angeordnet sind, dass sie die von der Lasttragvorrichtung getragene Last im Gebrauchszustand auf die Hüften eines Benutzers übertragen,
ein Rückenelement (21) mit einem zweiten Nut (22), die mechanisch mit der ersten Nut verbunden ist, worin sich die zweite Nut entlang der ersten Achse erstreckt, worin das Rückenelement derart angeordnet ist, dass es im Gebrauchszustand am Rücken des Benutzers anliegt,
worin die erste Nut derart angeordnet ist, dass sie die zweite Nut gleitend entlang der ersten Achse führt, wenn die mechanische Verbindung zwischen der ersten und der zweiten Nut vorübergehend gelöst ist.

2. Lasttragvorrichtung gemäss Anspruch 1, worin ein erstes Hüftpolster (31a) mit dem ersten Seitenteil mechanisch verbunden ist und ein zweites Hüftpolster (31b) mit dem zweiten Seitenteil mechanisch verbunden ist, worin die Hüftpolster im Gebrauchszustand zwischen dem jeweiligen Seitenteil und der jeweiligen Hüfte des Benutzers angeordnet sind;
und worin vorzugsweise ein lösbares Gurtelement (32), welches so angeordnet ist, dass es im Gebrauchszustand das Becken oder die Hüften des Benutzers umgibt, mit dem ersten und zweiten Hüftpolster (31a, 31b) mechanisch verbunden ist, vorzugsweise das erste und zweite Hüftpolster umfasst.

3. Lasttragvorrichtung gemäss Anspruch 2, wobei die mechanischen Verbindungen des ersten Hüftpolsters mit dem ersten Seitenelement und des zweiten Hüftpolsters mit dem zweiten Seitenelement derart angeordnet sind, dass sie eine relative Drehbewegung oder eine relative Translationsbewegung zulassen.

4. Lasttragvorrichtung gemäss einem der vorhergehenden Ansprüche, worin sich ein erster Arm (41) vom Rückenelement (21) und weg vom Basiselement (2) erstreckt, worin ein freies Ende (43) des ersten Arms im Gebrauchszustand höher als und vor einer Schulter des Benutzers positioniert ist, wobei vorzugsweise der erste Arm einen abgewinkelten Querschnitt aufweist.

5. Lasttragvorrichtung gemäss Anspruch 4, worin ein lasttragendes Element (42), wie etwa ein Riemen oder Seil, sich vom freien Ende (43) des ersten Arms erstreckt, worin ein Nutzlastbefestigungselement (44), wie etwa ein Haken oder Karabinerhaken oder ein anderes Hebezeug, mit einem freien Ende des lasttragenden Elements mechanisch verbunden ist, worin eine Länge des lasttragenden Elements zwischen dem freien Ende (43) des Arms und dem Nutzlastbefestigungselement einstellbar ist.

6. Lasttragvorrichtung gemäss Anspruch 5, worin der erste Arm eine vorzugsweise federbelastete Spule (45) trägt, welche zum Aufwickeln des lasttragenden Elements angeordnet ist, worin das lasttragende Element mechanisch mit der Spule verbunden ist, worin vorzugsweise der erste Arm oder die Spule eine lösbare Bremse (46) umfassen, vorzugsweise eine Klemmschelle, die geeignet ist, ein unbeabsichtigtes Abwickeln des lasttragenden Elements zu verhindern, worin vorzugsweise die Bremse (46) angeordnet ist, um das lasttragende Element (42) freizugeben, wenn die Last einen oberen Grenzwert überschreitet.

7. Lasttragvorrichtung gemäss Anspruch 5 oder 6, worin die Länge des lasttragenden Elements durch einen Kabelzugmechanismus eingestellt werden kann, der auch betätigt werden kann, während eine Last am lasttragenden Element getragen wird, worin der Kabelzugmechanismus derart angeordnet ist, dass die Länge des lasttragenden Elements nach dem Ziehen des Kabels oder während dem Ziehen des Kabels verlängert oder verkürzt werden kann.

8. Lasttragvorrichtung mit einem dem ersten Arm ähnlichen zweiten Arm (41a) gemäss einem der Ansprüche 4 bis 7, worin ein freies Ende (43a) des zweiten Arms und das freie Ende (43) des ersten Arms im Gebrauchszustand einen Zwischenraum für den Hals und/oder Kopf des Benutzers lassen.

9. Lasttragvorrichtung gemäss einem der vorhergehenden Ansprüche, zudem umfassend einen ersten Schultergurt (34) zum Übertragen eines Teils der von der Lastentragevorrichtung getragenen Last auf die Schulter eines Benutzers im Gebrauchszustand, worin der erste Schultergurt mit einem der Hüftpolster (31) oder mit einem der Seitenelemente (11) mechanisch verbunden ist, vorzugsweise mit einem zweiten Schultergurt (34a) ähnlich dem ersten Schultergurt;
und worin die Vorrichtung zudem vorzugsweise ein Schulterpolster (36) umfasst, welches derart angeordnet ist, dass es im Gebrauchszustand an den Schultern des Benutzers anliegt, worin der erste Arm und/oder der zweite Arm mit dem Schulterpolster mechanisch verbunden sind.

10. Lasttragvorrichtung gemäss einem der vorhergehenden Ansprüche, zudem umfassend einen Brustgurt (35) zur Stabilisierung der Lastentragevorrichtung in deren Gebrauchszustand, vorzugsweise zur lösbaren Verbindung des ersten und zweiten Schultergurts ausgebildet.

11. Lasttragvorrichtung gemäss einem der Ansprüche 6 bis 10, zudem umfassend einen Griff (47), welcher zum Lösen des lasttragenden Elements (42) und/oder der Bremse (46) betätigbar ist, vorzugsweise worin der Griff (47) reversibel von einem ersten Zustand, in dem das lasttragende Element (42) gesichert ist, in einen zweiten Zustand, in dem die Bremse (46) gelöst ist, überführbar ist, wobei der Griff ein Drehhebel oder ein Druckknopfschalter sein kann.

12. Lasttragvorrichtung gemäss einem der Ansprüche 6 bis 11, zudem umfassend einen Rotationsdämpfer (48), der dazu angeordnet ist, um auf die Spule (45) ein Drehmoment gegen das Abwickeln des lasttragenden Elements (42) auszuüben oder das Abwickeln zu verlangsamen.

13. Lasttragvorrichtung gemäss einem der Ansprüche 6 bis 12, zudem umfassend einen Freilauf (49), der derart angeordnet ist, dass er es der Spule (45) ermöglicht, das lasttragende Element (42) aufzuwickeln, während die Bremse (46) nicht gelöst ist.

14. Lasttragvorrichtung gemäss einem der Ansprüche 6 bis 13, zudem umfassend einen Ratschen- und Sperrklinkenmechanismus, worin die Ratsche (50) drehfest mit der Spule (45) gekoppelt ist, worin die Sperrklinke (51) derart angeordnet ist, dass sie ein Abwickeln des lasttragenden Elements (42) verhindert, wenn sie mit der Ratsche in Eingriff steht, worin die Sperrklinke durch den Griff (47) betätigt werden kann, um die Ratsche (50) freizugeben.

15. Verwendung einer Lasttragvorrichtung gemäss einem der vorhergehenden Ansprüche zum Heben und/oder Tragen eines Gepäckstücks, eines Möbelstücks, von Baumaterial, Bauteilen, einer grösseren oder schwereren Baugruppe, von Umzugskartons, Paketen, Taschen und/oder anderen schweren Lasten.

## Revendications

1. Dispositif de support de charge (1) destiné à être fixé au bassin d'un utilisateur, le dispositif de support comprenant :
un élément de base (2) comportant une première rainure (3) s'étendant le long d'un premier axe A, une première (4a) et une deuxième section d'extension (4 b), la première rainure étant disposée entre la première et la deuxième section d'extension,
un premier membre latéral coudé (11a), dont une extrémité est mécaniquement reliée à la première section d'extension, le premier membre latéral pouvant être positionné essentiellement perpendiculairement au premier axe et/ou pouvant pivoter par rapport à l'élément de base lorsque la liaison mécanique avec l'élément de base est rompue, et
un deuxième membre latéral coudé (11b), dont une extrémité est mécaniquement reliée à la deuxième section d'extension, le deuxième membre latéral pouvant être positionné essentiellement perpendiculairement au premier axe et/ou pouvant pivoter par rapport à l'élément de base, lorsque la liaison mécanique avec l'élément de base est rompue,
dans lequel les premier et deuxième membres coudés sont disposés de manière à transférer la charge supportée par le dispositif de support de charge sur les hanches d'un utilisateur dans l'état d'utilisation,
un membre dorsal (21) comportant une deuxième rainure (22) reliée mécaniquement à la première rainure, la deuxième rainure s'étendant le long du premier axe, le membre dorsal étant conçu pour s'appuyer sur le dos de l'utilisateur dans l'état d'utilisation,
dans lequel la première rainure est arrangée pour guider la seconde rainure le long du premier axe, lorsque la liaison mécanique entre la première et la seconde rainure est temporairement rompue.

2. Dispositif de support de charge selon la revendication 1, dans lequel un premier coussinet de hanche (31a) est relié mécaniquement au premier membre latéral, et un deuxième coussinet de hanche (31b) est relié mécaniquement au deuxième membre latéral, dans lequel les coussinets de hanche sont disposés entre le membre latéral respectif et la hanche de l'utilisateur respectif dans l'état d'utilisation ;
et dans lequel, de préférence, un membre de ceinture amovible (32) arrangé pour entourer le bassin ou les hanches de l'utilisateur dans l'état d'utilisation est relié mécaniquement au premier et au deuxième coussinet de hanche (31a, 31b), et comprend de préférence le premier et le deuxième coussinet de hanche.

3. Dispositif de support de charge selon la revendication 2, dans lequel les liaisons mécaniques du premier coussinet de hanche avec le premier membre latéral et du second coussinet de hanche avec le second membre latéral sont conçues pour permettre un mouvement de rotation relatif ou un mouvement de translation relatif.

4. Dispositif de support de charge selon l'une des revendications précédentes, dans lequel un premier bras (41) s'étend à partir du membre dorsal (21) et à l'écart de l'élément de base (2), dans lequel une extrémité libre (43) du premier bras est positionnée plus haut que et devant une épaule de l'utilisateur dans l'état d'utilisation, de préférence dans lequel le premier bras présente une section transversale formant un angle.

5. Dispositif de support de charge selon la revendication 4, dans lequel un élément porteur de charge (42), tel qu'une sangle ou une corde, s'étend à partir de l'extrémité libre (43) du premier bras, dans lequel un élément de fixation de la charge utile (44), tel qu'un crochet, un mousqueton ou un autre dispositif de levage, est relié mécaniquement à une extrémité libre de l'élément porteur de charge, dans lequel la longueur de l'élément porteur de charge, mesurée entre l'extrémité libre du bras (43) et l'élément de fixation de la charge utile, est réglable.

6. Dispositif de support de charge selon la revendication 5, dans lequel le premier bras supporte une bobine (45), de préférence à ressort, qui est conçue pour enrouler l'élément porteur de charge, dans lequel l'élément porteur de charge est relié mécaniquement à la bobine, de préférence dans lequel le premier bras ou la bobine comprennent un frein libérable (46), de préférence un taquet à came, apte à empêcher le déroulement involontaire de l'élément porteur de charge, de préférence dans lequel le frein (46) est conçu pour libérer l'élément porteur de charge (42) si la charge excède une valeur limite supérieure.

7. Dispositif de support de charge selon la revendication 5 ou 6, dans lequel la longueur de l'élément porteur de charge peut être ajustée par un mécanisme de traction de câble pouvant également être utilisé pendant qu'une charge est supportée par l'élément porteur de charge, dans lequel le mécanisme de traction de câble est disposé de manière à ce que la longueur de l'élément porteur de charge puisse être allongée ou raccourcie après avoir tiré le câble ou pendant que le câble est tiré.

8. Dispositif de support de charge comprenant un deuxième bras (41a) similaire au premier bras selon l'une des revendications 4 à 7, dans lequel une extrémité libre (43a) du deuxième bras et l'extrémité libre (43) du premier bras laissent un espace pour le cou et/ou la tête de l'utilisateur dans l'état d'utilisation.

9. Dispositif de support de charge selon l'une des revendications précédentes, comprenant en outre une première sangle d'épaule (34) pour transférer une partie de la charge supportée par le dispositif de support de charge sur l'épaule d'un utilisateur dans son état d'utilisation, dans lequel la première sangle d'épaule est mécaniquement reliée à l'un des coussinets de hanche (31) ou à l'un des membres latéraux (11), comprenant de préférence une deuxième sangle d'épaule (34a) similaire à la première sangle d'épaule;
et, dans lequel le dispositif comprend de préférence en outre une épaulière (36) conçue pour s'appuyer sur les épaules de l'utilisateur dans l'état d'utilisation, dans lequel le premier bras et/ou le second bras sont mécaniquement reliés à l'épaulière.

10. Dispositif de support de charge selon l'une des revendications précédentes, comprenant en outre une sangle de poitrine (35) pour stabiliser le dispositif de support de charge dans son état d'utilisation, de préférence agencée pour relier de manière amovible la première et la deuxième sangle d'épaule.

11. Dispositif de support de charge selon l'une des revendications 6 à 10, comprenant en outre une poignée (47) conçue pour être actionnée afin de libérer l'élément porteur de charge (42) et/ou le frein (46), de préférence dans laquelle la poignée (47) peut être transférée de manière réversible d'un premier état dans lequel l'élément porteur de charge (42) est fixé à un second état dans lequel le frein (46) est libéré, la poignée pouvant être un levier rotatif ou un interrupteur à bouton-poussoir.

12. Dispositif de support de charge selon l'une des revendications 6 à 11, comprenant en outre un amortisseur de rotation (48) qui est arrangé pour appliquer un couple sur la bobine (45) pour empêcher le déroulement de l'élément porteur de charge (42) ou pour décélérer le déroulement.

13. Dispositif de support de charge selon l'une des revendications 6 à 12, comprenant en outre une roue libre (49) disposée de manière à permettre à la bobine (45) d'enrouler l'élément porteur de charge (42) tant que le frein (46) n'est pas libéré.

14. Dispositif de support de charge selon l'une des revendications 6 à 13, comprenant en outre un mécanisme à cliquet, dans lequel la roue dentée (50) est couplée en rotation avec la bobine (45), dans lequel le cliquet (51) est conçu pour empêcher le déroulement de l'élément porteur de charge (42) lorsqu'il est engagé avec la roue dentée, dans lequel le cliquet peut être actionné par la poignée (47) pour libérer la roue dentée (50).

15. Utilisation d'un dispositif de support de charge selon l'une des revendications précédentes pour soulever et/ou porter un bagage, un meuble, un matériau de construction, des éléments de construction, un ensemble plus grand ou plus lourd, des cartons de déménagement, des colis, des sacs, et/ou d'autres charges lourdes.
